# EUROPEAN PATENT APPLICATION

(11) **EP 2 302 920 A1**
(43) Date of publication of application: **30.03.2011**
(21) Application number: 10168220.1
(22) Date of filing: 02.07.2010
(51) Int. Cl.: H04N 5/76, G11B 27/02, G11B 27/10

(54) **Electronic apparatus and channel switching method**

(30) Priority: 24.09.2009 JP 2009218566
(71) Applicant: Kabushiki Kaisha Toshiba, Tokyo 105-8001 (JP)
(72) Inventor: Kuwahara, Kazuki, Tokyo 105-8001 (JP)
(74) Representative: Henkel, Feiler & Hänzel

(57) **Abstract**

An electronic apparatus includes: a broadcast receiving module configured to receive video signals on a plurality of channels; a channel switching control module configured to switch the played-back video signal to a video signal on one of the channels in response to a received switching instruction; and a recording/playback control module configured to: record the received video signals in a storage medium using either a first recording method or a second recording method, wherein the first recording method is for recording a video signal on one of the channels, and the second recording method is for recording a plurality of video signals on a plurality of channels; and play back the video signals using either a first playback method or a second playback method, wherein the first playback method is for playing back the video signal on said one of the channels recorded by the first recording method, and the second playback method is for playing back each of the video signals on the channels recorded by the second recording method, by switching the video signals on the channels. When the channel switching control module receives a switching instruction while the recording/playback control module is playing back the video signal using the first playback method, the channel switching control module switches the played-back video signal to a video signal being broadcast currently on a channel, in response to the switching instruction. When the channel switching control module receives a switching instruction while the recording/playback control module is playing back one of the video signals using the second playback method, the channel switching control module switches said one of the video signals being played back to another one of the recorded video signals, in response to the switching instruction, and the recording/playback control module plays back said another one of the recorded video signals from approximately the same time as a playback position of said one of the video signals at the time of receiving the switching instruction.

## Description

### BACKGROUND OF THE INVENTION

### 1. Field

One embodiment of the present invention relates to an electronic apparatus and a channel switching method.

### 2. Description of the Related Art

In recent years, with the increase in the storage capacity of HDDs, recording/playback apparatus have been proposed which can receive plural broadcast signals being broadcast simultaneously with plural tuners and automatically record all programs that satisfy conditions relating to channels, a time slot, etc.

Such an apparatus have a function that enables the following operation. That is, when a button for switching the channel in channel number order is pressed during a playback of certain program data, a playback of program data of another channel is started from a portion having the same time data as time data of a playback portion of the program data being played back (see e.g., W02007/116773).

However, the above technique can be used only in the case where plural broadcast signals were recorded simultaneously. The channel cannot be switched in the case where programs were recorded by specifying them individually.

### SUMMARY OF THE INVENTION

The present invention has been made in view of the above problem, and an illustrative object of the invention is therefore to provide an electronic apparatus and a channel switching method, which increase the ease of a channel switching operation during a playback of a recorded program.

According to one or more illustrative aspects of the present invention, there is provided an electronic apparatus. The electronic apparatus includes: a broadcast receiving module configured to receive video signals on a plurality of channels; a channel switching control module configured to make switching to a video signal on one of the channels in response to a received switching instruction; and a recording/playback control module configured to: record the received video signals in a storage medium using either a first recording method or a second recording method, wherein the first recording method is for recording a video signal on one of the channels, and the second recording method is for recording a plurality of video signals on a plurality of channels; and play back the video signals using either a first playback method or a second playback method, wherein the first playback method is for playing back the video signal on said one of the channels recorded by the first recording method, and the second playback method is for playing back each of the video signals on the channels recorded by the second recording method, by switching the video signals on the channels. When the channel switching control module receives a switching instruction while the recording/playback control module is playing back the video signal using the first playback method, the channel switching control module switches the played-back video signal to a video signal being broadcast currently on a channel, in response to the switching instruction. When the channel switching control module receives a switching instruction while the recording/playback control module is playing back one of the video signals using the second playback method, the channel switching control module switches said one of the video signals being played back to another one of the recorded video signals, in response to the switching instruction, and the recording/playback control module plays back said another one of the recorded video signals from approximately the same time as a playback position of said one of the video signals at the time of receiving the switching instruction.

According to one or more illustrative aspects of the present invention, there is provided a channel switching method. The channel switching method includes: receiving video signals on a plurality of channels; recording the received video signals in a storage medium using either a first recording method or a second recording method, wherein the first recording method is for recording a video signal on one of the channels, and the second recording method is for recording a plurality of video signals on a plurality of channels; playing back the video signals using either a first playback method or a second playback method, wherein the first playback method is for playing back the video signal on said one of the channels recorded by the first recording method, and the second playback method is for playing back each of the video signals on the channels recorded by the second recording method, by switching the video signals on the channels, when receiving a switching instruction while playing back the video signal using the first playback method, switching the played-back video signal to a video signal being broadcast currently on a channel, in response to the switching instruction; and when receiving a switching instruction while playing back one of the video signals using the second playback method, switching said one of the video signals being played back to another one of the recorded video signals, in response to the switching instruction, and playing back said another one of the recorded video signals from approximately the same time as a playback position of said one of the video signals at the time of receiving the switching instruction.

Other aspects and advantages of the present invention will be apparent from the following description, the drawings and the claims.

### BRIEF DESCRIPTION OF THE DRAWINGS

A general architecture that implements the various features of the invention will now be described with reference to the drawings. The drawings and the associated descriptions are provided to illustrate embodiments of the invention and not to limit the scope of the invention.

Fig. 1 shows an appearance of a TV broadcast receiver according to an embodiment of the invention;
Fig. 2 shows an appearance of a remote controller of the TV broadcast receiver according to the embodiment;
Fig. 3 is a functional block diagram of the TV broadcast receiver according to the embodiment;
Fig. 4 is a conceptual diagram showing an example recording state of an HDD used in the embodiment;
Fig. 5 is a conceptual diagram of a recording state of time information tables used in the embodiment;
Fig. 6 shows an example past program table used in the embodiment;
Fig. 7 is a schematic diagram showing how channel switching is performed during a playback according to a second playback method in the embodiment;
Fig. 8 is a flowchart of a process of the second playback method which is executed by a channel switching control module in the embodiment; and
Fig. 9 is a flowchart of a process of a first playback method which is executed by the channel switching control module in the embodiment.

### DETAILED DESCRIPTION OF EXEMPLARY EMBODIMENTS

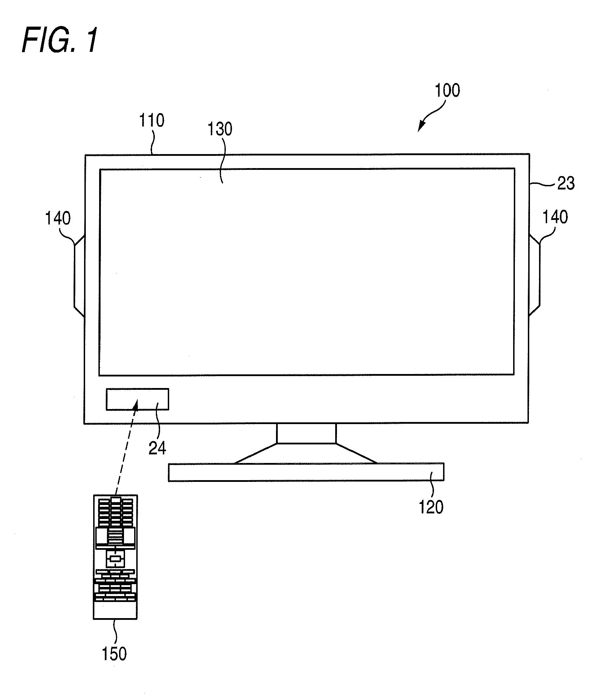

Exemplary embodiments of the present invention will be hereinafter described with reference to Figs. 1-9.
A TV broadcast receiver 100 as an example electronic apparatus according to the invention will be described below.
Fig. 1 shows an appearance of the TV broadcast receiver 100 according to the embodiment. Although the embodiment is directed to the TV broadcast receiver as an example electronic apparatus according to the invention, the invention is not limited thereto. That is, the invention can be applied to any apparatus incorporating a broadcast receiver, such as a broadcast receiver, a cell phone with a broadcast receiving function, a personal computer with a broadcast receiving function, and a video recording apparatus incorporating a broadcast receiver. The broadcast to which the invention is related is not limited to a broadcast that is transmitted through the air in the form of radio waves and encompasses a broadcast of a program that is distributed from a broadcasting station via a cable or over a network such as an IP (Internet protocol) network.

The TV broadcast receiver 100 includes a thin cabinet 110 and a support stage 120 which supports the cabinet 110. The cabinet 110 houses electronic devices such as tuners 3 (described later). A video display unit 130 occupies a central portion of the cabinet 110 and is disposed on the front side in the cabinet 110. The two side walls of the cabinet 110 are provided with respective speakers 140 to enable reproduction of a stereo sound. For example, the video display unit 130 may be an SED (surface-conduction electron-emitter display) panel, an LCD (liquid crystal display) panel or EL (Electro Luminescence) display.

A receiving module 24 for receiving an operation signal that is radio-transmitted from a remote controller 150 is provided at a bottom-front portion of the cabinet 110. An operation module 23 including a power switch etc. is disposed on the right-hand side wall of the cabinet 110 of the TV broadcast receiver 100. After supplied with power externally via a plug (not shown), the TV broadcast receiver 100 receives various broadcast signals via an antenna 1 (described later), decodes the received broadcast signals with a signal processing module 12, and outputs resulting video signals and audio signals. The video display unit 130 processes a decoded video signal and displays resulting video. The speakers 140 process decoded audio signals and outputs a resulting sound.

Although in the embodiment the cabinet 110 houses the electronic devices such as the tuners 3, the invention is not limited to such a case. That is, the electronic devices such as the tuners 3 may be housed in a cabinet that is separate from the cabinet 110 and the other cabinet may be connected to the TV broadcast receiver 100. The video display unit 130 and the speakers 140 are provided in the TV broadcast receiver 100 to output video and audio.

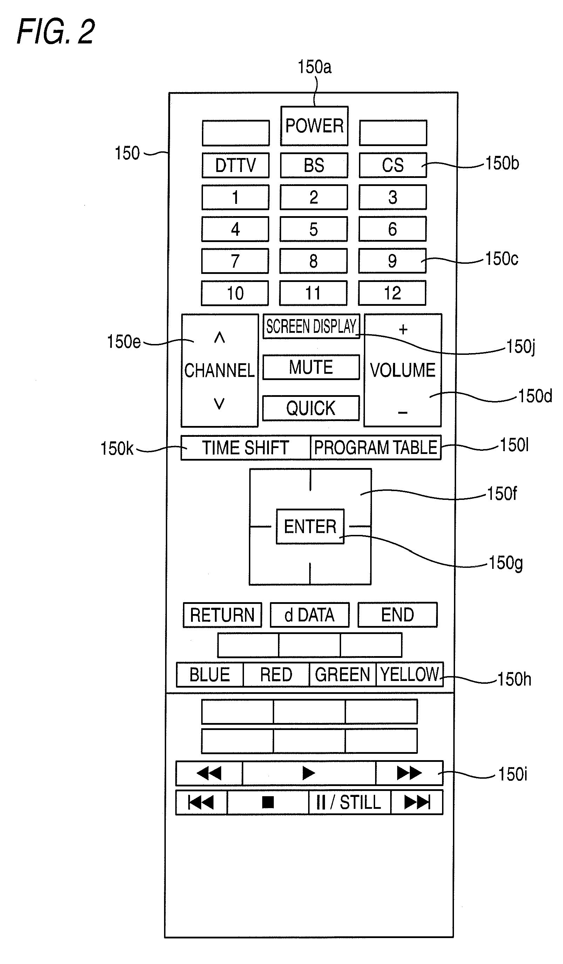

Next, the configuration of the remote controller 150 of the TV broadcast receiver 100 will be described with reference to Fig. 2. Fig. 2 shows an appearance of the remote controller 150 of the TV broadcast receiver 100 according to the embodiment.

The remote controller 150 is provided with a power key 150a, broadcast switching keys 150b, direct channel selection keys 150c, a volume adjustment key 150d, a channel up/down key 150e, a cursor key 150f, an enter key 150g, blue, red, green, and yellow color keys 150h, trick playback keys 150i, a screen display key 150i, a time shift key 150k, and a program table key 1501.

The power key 150a is a key for making an instruction to power on or off the TV broadcast receiver 100. The broadcast switching keys 150b are keys for making an instruction to switch the type of broadcast to be displayed by the TV broadcast receiver 100 between the ground-wave digital broadcast, the BS digital broadcast, and the CS digital broadcast. The direct channel selection keys 150c are keys for making an instruction to cause the TV broadcast receiver 100 to display a video signal on a channel corresponding to each key. The volume adjustment key 150d is a key for making an instruction to change the sound volume of the speakers 140.

The channel up/down key 150e is a key for making an instruction to switch, in channel number order, the display channel of the TV broadcast receiver 100. The cursor key 150f is a key for making an instruction to move the cursor that is displayed on the video display unit 130. The enter key 150g is a key for making an instruction to decide on an item where the cursor is located.

The color keys 150h are keys for making an instruction to cause an operation corresponding to an operation guide that is displayed on the screen and assigned to each color key. The trick playback keys 150i are keys for making an instruction to perform a trick playback such as fast feed, rewind, halt, playback, skip to the next program, skip to the preceding program, or the like. The screen display key 150j is a key for displaying, for example, a banner indicating a playback position of a recorded program.

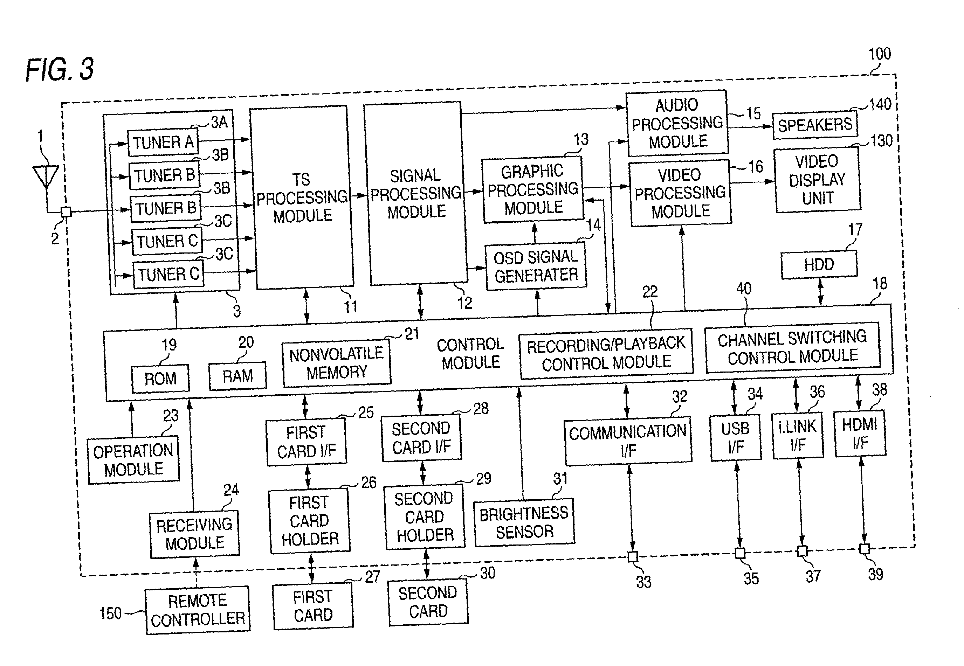

The time shift key 150k is a key for displaying a past program table 44 which shows programs that were recorded simultaneously by a second recording method (described later). The program table key 1501 is a key for displaying a table of programs being broadcast or to be broadcast on the basis of EPG (electronic program guide) information. When each of the above keys is operated, an operation signal indicating the content of an instruction is provided to a control module 18 (see Fig. 3) via the receiving module 24.

Fig. 3 is a functional block diagram of the TV broadcast receiver 100 according to the embodiment. The functions of the TV broadcast receiver 100 which performs channel switching according to the embodiment will be described with reference to Fig. 3.

The TV broadcast receiver 100 is equipped with the antenna 1, an input terminal 2, tuners 3, a TS (transport stream) processing module 11, the signal processing module 12, a graphic processing module 13, an OSD (on-screen display) signal generator 14, an audio processing module 15, a video processing module 16, am HDD (hard disk drive) 17, the control module 18, the operation module 23, the receiving module 24, a first card I/F (interface) 25, a first card holder 26, a second card I/F 28, a second card holder 29, a brightness sensor 31, a communication I/F 32, a LAN terminal 33, a USB I/F 34, a USB terminal 35, an i.LINK I/F 36, an i.LINK terminal 37, an HDMI I/F 38, an HDMI terminal 39, the video display unit 130, and the speakers 140.

The control module 18 is equipped with a ROM 19, a RAM 20, a nonvolatile memory 21, a recording/playback control module 22, a channel switching control module 40, and a CPU.

The antenna 1 is configured so as to be able to receive various types of broadcasts such as the ground-wave digital broadcast, the BS digital broadcast, and the CS digital broadcast.
The input terminal 2 inputs broadcast signals received by the antenna 1 to the plural tuners 3.
Each of the tuners 3 tunes in to one, on a desired channel, of three kinds of broadcasts, that is, a ground-wave digital broadcast, a BS digital broadcast, and a CS digital broadcast according to a control signal supplied from the control module 18, demodulates the selected broadcast signal (performs OFDM (orthogonal frequency division multiplexing) demodulation for a ground-wave digital broadcast or PSK (phase shift keying) demodulation for a BS digital broadcast and a CS digital broadcast) into a transport stream (TS) containing a desired program, and provides the TS to the TS processing module 11.

The plural tuners 3 are given reference symbols 3A, 3B, and 3C according to broadcast signals to receive. The tuners are referred to simply as "tuners 3" if they need not be distinguished from each other. In this specification, the tuner 3A is for viewing and the tuners 3B and 3C are for recording. Differences between a recording method for recording broadcast signals selected by the tuners 3B and a recording method for recording broadcast signals selected by the tuners 3C will be described later.

The TS processing module 11 receives plural transport streams of selected channels from the tuners 3, re-multiplexes those transport streams into one transport stream, and outputs the resulting transport stream to the signal processing module 12.
When recording is to be performed, the TS processing module 11 receives, from the tuners 3, plural transport streams selected by the tuners 3B and 3C, re-multiplexes those transport streams into one transport stream, and outputs the resulting transport stream to the signal processing module 12.

The signal processing module 12 performs proper digital signal processing on the transport stream obtained by re-multiplexing the plural transport streams output from the TS processing module 11. A resulting transport stream is separated into a video signal, an audio signal, and a data signal, which are provided to the graphic processing module 13, the audio processing module 15, and the OSD signal generator 14 or the control module 18, respectively. The transport stream obtained by re-multiplexing the plural transport streams to perform recording is provided to the control module 18.

In general, a data signal contains various kinds of information relating to broadcast programs. Example information relating to programs is time information. In the ground-wave digital broadcast in Japan, the time and date table (TDT) and the time offset table (TOT) including offset time information which is employed when summer time is effective are defined as program arrangement information tables by ARIB STD-10 which is a standard of Association of Radio Industries and Businesses (ARIB). A current date and time that comply with Japan Standard Time (JST = (Universal Time Coordinated (UTC)) + 9 hours) and a Modified Julian Day (MJD) are transmitted according to those tables.

In this specification, a time and offset table (TOT) is employed as a current date and time. In ARIB TR-B 14 which prescribes the operation rules of the ground-wave digital broadcast of Japan, the default cycle of transmission of a time and offset table (TOT) is set at 5 seconds. That is, a TOT is transmitted every 5 seconds.

Other example information relating to programs which are contained in a data signal is EPG information, which includes channel information, channel numbers, program names, schedules, etc. In the embodiment, the EPG information is used for generating a program table of programs that are scheduled to be broadcast from the present time to one week ahead and a past program table 44 of recorded programs.

The graphic processing module 13 decodes the digital video signal that is output from the signal processing module 12. The decoded video signal is combined with (superimposed on) an OSD signal that is output from the OSD signal generator 14, and outputs a resulting signal to the video processing module 16. The graphic processing module 13 can output a selected one of the decoded video signal and the OSD signal to the video processing module 16.

The OSD signal generator 14 generates, under the control of the control module 18, an OSD signal to be used for displaying a UI (user interface) picture, for example. The data signal that is separated from the digital broadcast signal by the signal processing module 12 is converted into an OSD signal having a proper format by the OSD signal generator 14 and output to the graphic processing module 13.

The audio processing module 15 converts the audio signal that is provided from the signal processing module 12 into analog audio signals having such a format as to be reproducible by the speakers 140. The analog audio signals are provided to and reproduced by the speakers 140.

The video processing module 16 converts the signal that is output from the graphic processing module 13 into an analog video signal having such a format as to be displayable by the video display unit 130. The analog video signal is provided to the video display unit 130.

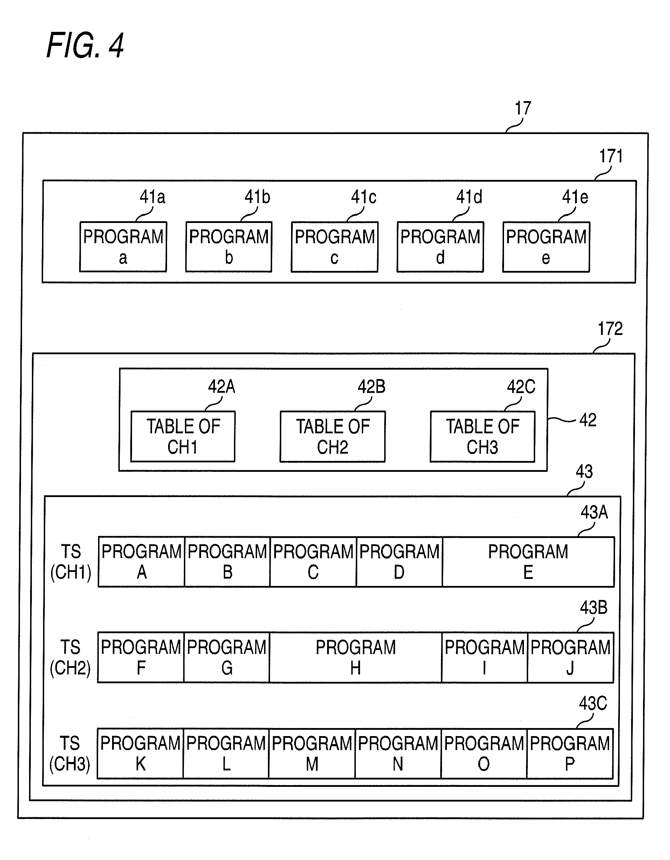

The HDD 17 stores sets of transport streams of the respective channels under the control of the recording/playback control module 22. A recording state of the HDD 17 will be described later with reference to Fig. 4.
The control module 18 activates a system control program and various processing programs stored in the ROM 19 in response to an operation signal that is provided from the operation module 23 or an operation signal that is transmitted from the remote controller 150 and received by the receiving module 24. The control module 18 controls the individual modules according to the activated programs using the RAM 20 as a work memory.

The ROM 19 is a memory for storing the system control program and the various processing programs to be run by the CPU.
The RAM 20 is a working memory in which the CPU is to develop various programs.
The nonvolatile memory 21 stores various kinds of setting information and control information etc. that are necessary for controlling the operations of the individual modules. In the embodiment, it is assumed that channel information of a program that was viewed immediately before a playback of a recorded program is stored in the nonvolatile memory 21.

The recording/playback control module 22 controls a function, of the TV broadcast receiver 100, of recording programs and playing back a recorded program. That is, the recording/playback control module 22 returns the multiplexed transport stream of the plural programs that is output from the TS processing module 11 into transport streams of the respective channels, and records the latter in the HDD 17.

Furthermore, the recording/playback control module 22 can perform a control for playing back recorded data. That is, the recording/playback control module 22 can read a transport stream of each channel recorded in the HDD 17, plays it back, and causes the video display unit 130 to display it and causes the speakers 140 to emit a sound. If the LAN terminal 33 is provided as a port dedicated to a LAN-compatible HDD, a program having Hi-Vision image quality can be recorded stably in an HDD connected to the LAN terminal 33 without being affected by the other network environments, network use statuses, or the like.

In the embodiment, the TV broadcast receiver 100 is provided with the two kinds of recording methods. The first recording method is a recording method in which a recording target program is specified individually or a recording start and end time are specified arbitrarily. That is, in the first recording method, one broadcast signal of a specified program is received and recorded in the HDD 17. This recording method is the same as the recording method that is employed in HDD recorders etc. in which a recording target program is specified individually. The tuners that are used for the first recording method are the tuners 3B.

The second recording method is a recording method in which conditions such as channels, a time slot, a day of the week, etc. are specified and all programs that satisfy the conditions are recorded. That is, plural broadcast signals that satisfy the conditions are received and recorded in the HDD 17 in parallel on a channel-by-channel basis. The tuners that are used for the second recording method are the tuners 3C.

Fig. 4 is a conceptual diagram showing an example recording state of the HDD 17 in the embodiment. A recording state of programs recorded by the above two recording methods will be described with reference to Fig. 4.

The recording/playback control module 22 performs recording in such a manner as to divide the recording area of the HDD 17 into a first recording area 171 and a second recording area 172. When recorded by the first method, transport streams of programs are recorded in the first recording area 171. Time information tables 42 generated for respective channels and sets of transport streams 43 of respective channels recorded by the second recording method are recorded in the second recording area 172.

Transport streams 41a-41e of programs **a-e** each of which was specified by the user individually are recorded in the first recording area 171. Program information such as channel information and a program name of each of the programs **a-e** is stored as part of its transport stream 41.

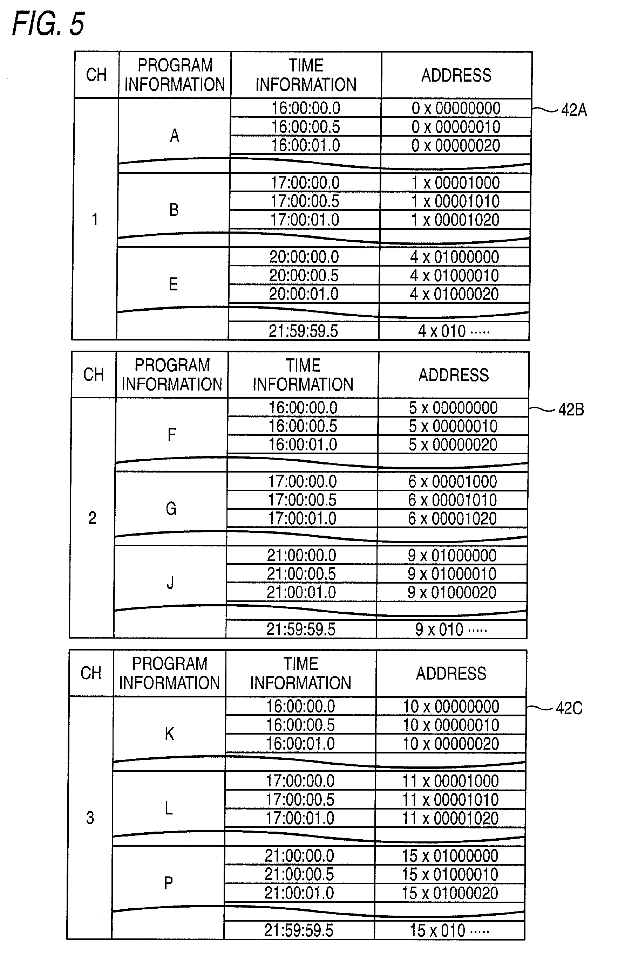

Fig. 5 is a conceptual diagram of a recording state of the time information tables 42 in the embodiment. Each of the time information tables 42A-42C corresponds to a respective one of channels 1-3. In each time information table 42, channel information, program information, time information, and addresses are correlated with each other. For example, the time information tables 42 are updated every 0.5 second which is equal to the broadcast GOP (group of picture) interval of MPEG2 (Moving Picture Experts Group 2). The address is a logical address or a physical address.

Transport streams 43 of programs A-P that were recorded by specifying conditions such as channels (1-3), a time slot and a day of the week are recorded in the second recording area 172 in groups of respective channels 1-3. When the recording capacity limit of the second recording area 172 is reached, recording is continued as programs are erased in order of their recording times (the oldest programs are erased first). The time information tables 42 are erased accordingly, that is, in order of their recording times, and updated as new programs are recorded.

The time information tables 42 need not always be stored in the second recording area 172; they may be stored in the nonvolatile memory 21 or a storage medium that is connected to the apparatus via any of the various interfaces.

In the embodiment, the TV broadcast receiver 100 is provided with two kinds of playback methods for playing back a recorded program(s).
The first playback method is a playback method in which only a selected one of programs recorded in the first recording area 171 is played back. That is, in the first playback method, a list of the programs **a-e** recorded in the first recording area 171 is displayed and a program selected on the basis of the list is played back.

The second playback method is a playback method in which transport streams of plural channels recorded in the second recording area 172 are played back consecutively in order according to their recording times in such a manner that the channel can be switched. That is, if the channel is switched in a state that one of the transport streams 43A-43C of channels 1-3 which are recorded in the second recording area 172 is being played back, a transport stream of a switching destination channel is played back and displayed starting from a position having approximately the same recording time as a recording time of a playback position, at the time of the switching, of the transport stream of the original channel. This makes it possible to view past programs with channel switching as if the user existed at that past time point and viewed those programs in real time.

The term "approximately the same recording time" means a period from about 10 seconds before and after the recording time of the playback position at the time of the channel switching. It takes several seconds to display video on the video display unit 130 from the start of a playback of a transport stream 43. Therefore, if a transition is made to a position having the same recording time, video may actually start to be displayed from a position that is several seconds delayed from the intended position. In view of the above, a transition may be made to a position that is several seconds before the recording time (time information) of a playback position of a transport stream 43 at the time of channel switching. This makes it possible to view video from a position having the same recording time as the recording time of the playback position of the transport stream 43 at the time of the channel switching.

Alternatively, a transition may be made to a position that is several seconds after the recording time (time information) of a playback position of a transport stream 43 at the time of channel switching. This makes it possible reproduce an operation that would be performed if the channel were switched at the past time point concerned in virtual real-time broadcast viewing.

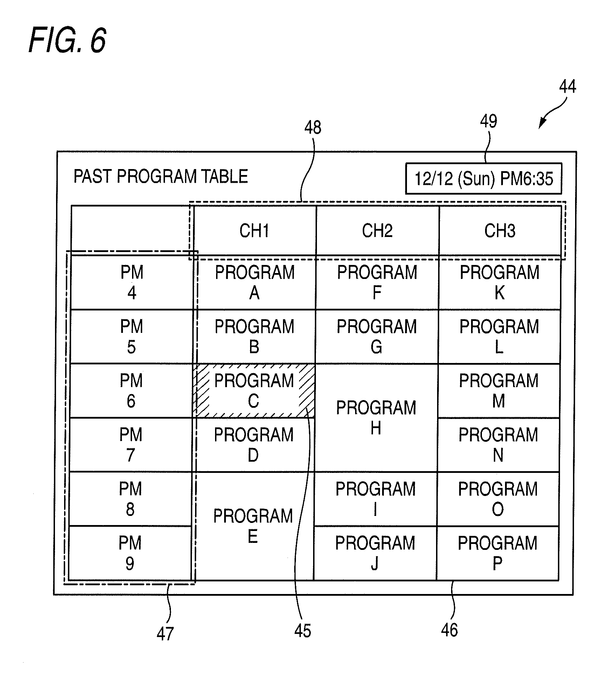

The second playback method is employed when a program is specified from a past program table 44 as shown in Fig. 6. That is, a playback according to the second playback method is performed when a program to be played back is selected from the programs A-P that were recorded by the second recording method as shown in the past program table 44. According to the second playback method, recorded programs are played back consecutively starting from a selected recorded program in order of their recording times.

A past program table 44 is displayed by pressing the time shift key 150k. When the time shift key 150k is pressed, the recording/playback control module 22 acquires the pieces of EPG information that are contained in the transport streams 43 recorded in the second recording area 172 and generates a past program table 44.

Fig. 6 shows an example past program table 44 used in the embodiment. As shown in Fig. 6, the past program table 44 contains a cursor 45, a table 46, a recording time display 47, a channel display 48, and a playback time display 49.

The cursor 45 is moved across the table 46 according to an operation of the cursor key 150f.
If programs of a channel a program of which was viewed immediately before the start of a playback according to the second playback method were recorded by the second recording method, the cursor 45 is moved to the position of a latest recorded program of that channel. If no program of a channel a program of which was being viewed immediately before the start of a playback according to the second playback method was recorded by the second recording method, the cursor 45 is displayed at the position of a latest recorded program of a channel whose number is smallest among the numbers of channels programs of which were recorded by the second recording method.

In displaying a past program table 44 by pressing the program table key 1501 during a playback according to the second playback method, the cursor 45 is displayed at the position of a recorded program that is being played back at the time of the pressing of the program table key 1501.

The table 46 is a table which shows recorded programs with the recording time display 47 and the channel display 48 as the vertical axis and the horizontal axis, respectively. Program information that is determined by channel information and time information is displayed at each cell of the table 46 on the basis of EPG information.

The recording time display 47 is a display of time slots in a period of 6 hours at the maximum from the recording end time of a latest recorded one of programs recorded by the second recording method. If the total recording time is shorter than 6 hours, the overall period of the recording time display 47 is made suitably for the total recording time.

The channel display 48 is a display of channels of transport streams 43 that are recorded in the second recording area 172.
The playback time display 49 is a display of a recording time of a program being played back by the second playback method.
If the enter key 150g is pressed in a state that the cursor 45 has been moved across the table 46 to the position of a desired program by an operation of the cursor key 150f, the recording/playback control module 22 plays back the program indicated by the cursor 45. In the example of Fig. 6, if the enter key 150g is pressed in a state that the cursor 45 is located at program C, the recording/playback control module 22 plays back program C first and then plays back program D upon completion of the playback of program C.

If recording is being performed by the second recording method when the time shift key 150k is pressed, the program information of the program being recorded is displayed on the bottom line of the table 46. A recording portion of the cell of the program being recorded is displayed in a different manner than the other portions of the table 46.

The operation module 23 generates an operation signal corresponding to an operation by the user and outputs it to the control module 18.
The receiving module 24 receives an operation signal corresponding to an operation on the remote controller 150 by the user and outputs it to the control module 18.
The first card holder 26 is connected to the control module 18 via the first card I/F 25. A first card 27 can be inserted into the first card holder 26. The first card 27 is a storage medium such as an SD (secure digital) memory card, an MMC (multimedia card), or a CF (compact flash; registered trademark) card. The first card 27 that is inserted in the first card holder 26 and the control module 18 can exchange information with each other via the first card I/F 25. The control module 18 can store data of an image, music, a broadcast program, or the like in the first card 27. The control module 18 can also display data of an image, music, a broadcast program, or the like on the video display unit 130 or cause the speakers 140 to emit a sound of such data by reading the data from the first card 27 and causing the audio processing module 15, the video processing module 16 to perform decoding processing.

The second card holder 29 is connected to the control module 18 via the second card I/F 28. A second card 30 can be inserted into the second card holder 29. The second card 30 is a storage medium for storing, for example, contract information of a broadcast reception contract and other information. The second card 30 that is inserted in the second card holder 29 and the control module 18 can exchange information with each other via the second card I/F 28.

The brightness sensor 31, which is disposed on the front surface of the cabinet 110, detects ambient brightness of the TV broadcast receiver 100 and outputs a detection result to the control module 18. The control module 18 controls the luminance of the video display unit 130 on the basis of the received detection result of the brightness sensor 31.

The LAN (local area network) terminal 33 is connected to the control module 18 via the communication I/F 32. The LAN terminal 33 is used as an Ethernet (registered trademark) port dedicated to a LAN-compatible HDD. When a LAN-compatible HDD is connected to the LAN terminal 33 as a NAS (network attached storage), the HDD and the control module 18 can exchange information via the communication I/F 32. In this case, the control module 18 functions as a DHCP (dynamic host configuration protocol) server and controls the LAN-compatible HDD connected to the LAN terminal 33 by assigning an IP (Internet protocol) address to it.

A storage medium such as a hard disk or a DVD (optical disc) can be mounted in an apparatus such as an HDD, a PC, or a DVD recorder that is connected to the control module 18 via the communication I/F 32. The control module 18 can record data of an image, music or a broadcast program on such a storage medium via a hub and a device connected to the hub. The control module 18 can also display data of an image, music or a broadcast program on the video display unit 130 or cause the speakers 140 to emit a sound of such data by reading the data from such a storage medium and reproducing the data.

The USB (universal serial bus) terminal 35 is connected to the control module 18 via the USB I/F 34. The USB terminal 35 is used as an ordinary USB-compatible port. A cell phone, a digital camera, a card reader/writer for any of various memory cards, an HDD or a keyboard is connected to the USB terminal 35 via a hub, for example. The control module 18 can exchange information with the device that is connected to it via the USB terminal 35 and the USB I/F 34.

The i.LINK terminal 37 is connected to the control module 18 via the i.LINK I/F 36. An AV-HDD, a D (digital)-VHS (video home system) recorder, or the like is connected serially to the i.LINK terminal 37. The control module 18 can exchange information with an apparatus connected to it via the i.LINK terminal 37 and the i.LINK I/F 36.

The HDMI terminal 39 is connected to the control module 18 via the HDMI I/F 38. A personal computer, a liquid crystal display or an AV amplifier is connected to the HDMI terminal 39. The control module 18 can exchange information with an apparatus connected to it via the HDMI terminal 39 and the HDMI I/F 38.

The channel switching control module 40 controls a channel switching operation during a playback according to the first or second playback method. A channel switching operation is specified by the direct channel selection keys 150c or the channel up/down key 150e. In the embodiment, the channel switching operation depends on the playback method.

Where a program is being played back by the first playback method, a transition is made to a program being broadcast currently. Where a specified program is being played back, it is not always the case that programs of other channels were recorded at the same time as the program being played back was. Therefore, a transition is made to the program being broadcast currently without channel switching between recorded programs.

Where a program is being played back by the second playback method, a transition is made to a position of a program of another channel that has approximately the same recording time as a recording time of a current playback position of the program being played back. Making a transition to a program of another channel using a current playback position makes it possible to view past programs with channel switching as if the user existed at that past time point and viewed those programs in real time. If no program of any other channel having approximately the same recording time as the recording time of the current playback position of the program being played back is recorded, a warning display to the effect that switching cannot be made to the specified channel is performed.

Next, a channel switching operation will be now described which is performed in response to an operation of a direct channel selection key 150c or the channel up/down key 150e of the remote controller 150.

First, a description will be made of a case that a channel switching instruction is made by a direct channel selection key 150c in a state that a desired program selected by the first playback method is being viewed. If a direct channel selection key 150c is pressed in a state that a desired program selected by the first playback method is being viewed, the channel switching control module 40 makes a transition to a program that is being broadcast currently on a channel specified by the direct channel selection key 150c.

Next, a description will be made of a case that a channel switching instruction is made by the channel up/down key 150e in a state that a desired program selected by the first playback method is being viewed. If the channel up/down key 150e is pressed in a state that a desired program selected by the first playback method is being viewed, the channel switching control module 40 acquires, from the nonvolatile memory 21, channel information of a program that was viewed immediately before the playback of the recorded program and makes a transition to a program that is being broadcast currently on the channel of the acquired channel information. Alternatively, the channel switching control module 40 may make a transition to a program that is being broadcast currently on a channel whose number is adjacent to a channel number of a program that was viewed immediately before the playback of the recorded program.

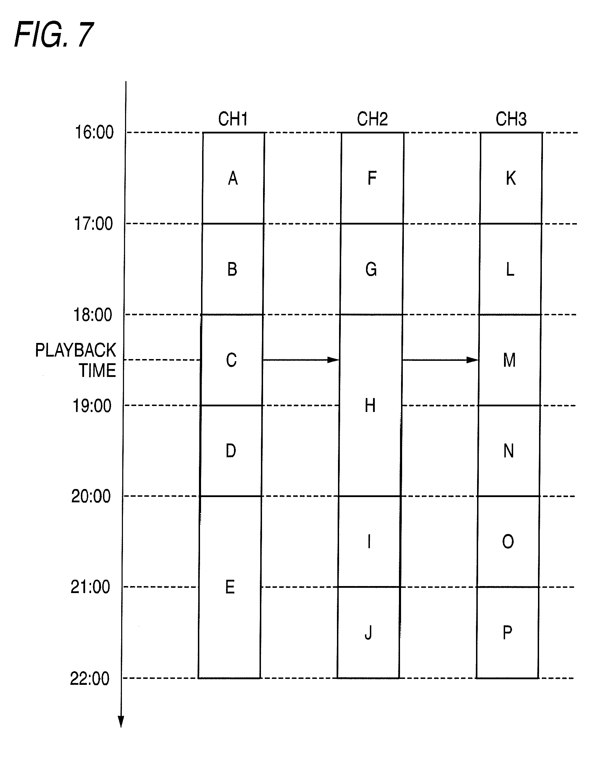

Fig. 7 is a schematic diagram showing how channel switching is performed during a playback according to the second playback method in the embodiment. A channel switching operation of a case that a playback is being performed by the second playback method will be described with reference to Fig. 7. The following description will be made with an assumption that a transition is made to a position of a transport stream 43 of a switching destination channel that has the same recording time as a recording time of a program being played back. However, a transition may be made to a position of a transport stream 43 of a switching destination channel that has approximately the same recording time as a recording time of a program being played back.

Fig. 7 shows sets of programs of respective channels recorded in the second recording area 172 with the vertical axis as a time axis. Programs that were broadcast on channel 1 (CH1), channel 2 (CH2), and channel 3 (CH3) from PM 4:00 to PM 10:00 were recorded. For example, in the case of channel 1, program A was recorded from PM 4:00 to PM 5:00, program B was recorded from PM 5:00 to PM 6:00, program C was recorded from PM 6:00 to PM 7:00, program D was recorded from PM 7:00 to PM 8:00, program E was recorded from PM 8:00 to PM 10:00.

First, a description will be made of a case that a channel switching instruction is made by a direct channel selection key 150c during a playback according to the second playback method. If a direct channel selection key 150c is pressed in a state that a program that was broadcast on a certain channel is played back by the second playback method, the channel switching control module 40 reads out and plays back a transport stream 43 of a channel corresponding to the pressed direct channel selection key 150c.

For example, if the channel 2 of the direct channel selection key 150c is pressed in a state that program C of channel 1 is being played back, the channel switching control module 40 reads an address of the transport stream 43A being played back currently from the time information table 42A and acquires time information corresponding to the address. The channel switching control module 40 acquires an address of the transport stream 43B that was recorded at the same time as the transport stream 43A from the time information table 42B of channel 2 on the basis of the acquired time information, and starts reading out the transport stream 43B from the position of the acquired address.

For example, if the channel 2 of the direct channel selection key 150c is pressed at 18:30:01 in a state that a program of channel 1 is being played back, the channel switching control module 40 searches the time information table 42B for information having the time information 18:30:01. Since in the case of channel 2 program H was recorded at 18:30:01, the channel switching control module 40 reads the transport stream 43B from the address that is stored as corresponding to the time information 18:30:01. The channel switching operation from channel 1 to channel 2 in response to the pressing of the direct channel selection key 150c is thus completed.

Next, a description will be made of a case that a channel switching instruction is made by a channel up/down key 150e. If the channel up/down key 150e is pressed in a state that a program that was broadcast on a certain channel is played back by the second playback method, the channel switching control module 40 reads out and plays back a transport stream 43 of a channel specified by the pressed direct channel selection key 150c. In this example, programs of channels 1, 2, and 3 were recorded simultaneously by the second recording method. Each time the same side of the channel up/down key 150e is pressed, the channel number is incremented or decremented in order.

For example, if the up side of the channel up/down key 150e is pressed in a state that program C of channel 1 is being played back, the channel switching control module 40 reads an address of the transport stream 43A being played back currently from the time information table 42A and acquires time information corresponding to the address. The channel switching control module 40 acquires an address corresponding to the same time information from the time information table 42B of channel 2 that is larger by one in channel number than channel 1, and reads out the transport stream 43B from the position of the acquired address. The channel switching operation from channel 1 to channel 2 is thus completed.

Where programs of three channels (channel 1 to channel 3) are recorded, switching is made from channel 2 to channel 3 if the up side of the channel up/down key 150e is pressed again after switching to channel 2. Also, switching is made to channel 1 if the up side of the channel up/down key 150e is pressed again after switching to channel 3. In this manner, the channel number is switched cyclically. Switching is made to channel 3 if the down side of the channel up/down key 150e is pressed in a state that a program of channel 1 is being played back. That is, when the down side of the channel up/down key 150e is pressed sequentially, the channel number is switched cyclically in opposite order to the order of a case that the up side is pressed sequentially.

As described above, in the second playback method, channel switching is performed by referring to the time information table 42 in which pieces of time information and addresses are correlated with each other for each of channels on which programs were broadcast simultaneously.

If the user wants to view a recorded program of a channel to which switching has been made, from the beginning, the user can find the head of the program by pressing a preceding program skip key of the trick playback keys 150i.

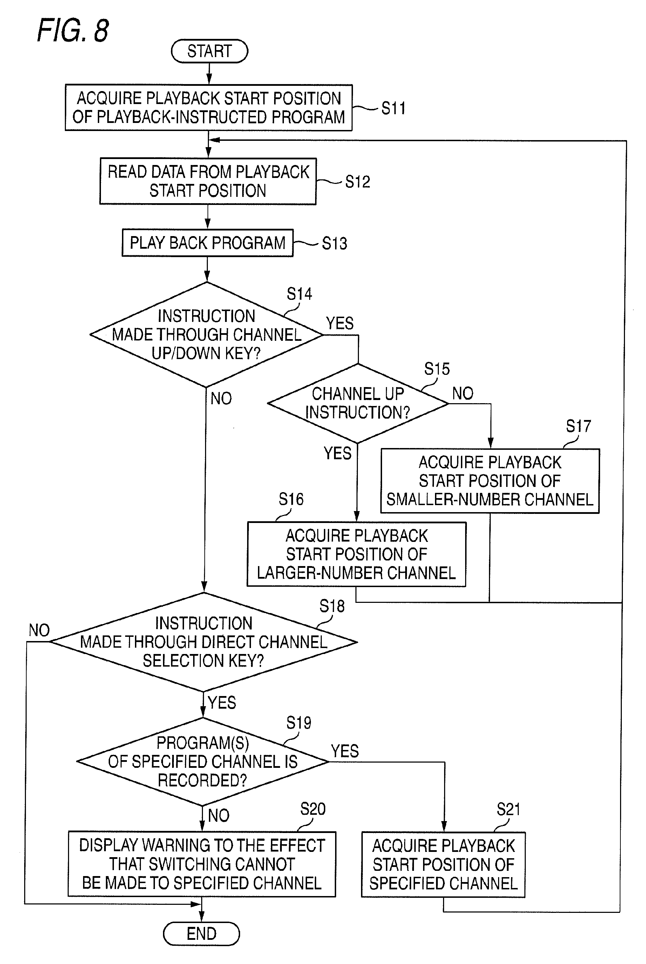

Fig. 8 is a flowchart of a process of the second playback method which is executed by the channel switching control module 40 in the embodiment. A channel switching process of the second playback method, which is executed during a playback, will be described below with reference to Fig. 8.

First, at step S11, the recording/playback control module 22 acquires a playback start position by searching the second recording area 172 for an address corresponding to a channel and a start time of a program selected from the past program table 44. At step S12, the recording/playback control module 22 reads a transport stream 43 from the second recording area 172 starting from the acquired playback start position. At step S13, the recording/playback control module 22 plays back the program by processing the read-out transport stream 43 and supplying resulting data to the audio processing module 15 and the video processing module 16.

At step S14, the channel switching control module 40 determines whether or not it has received an instruction made through the channel up/down key 150e. If determining that an instruction made through the channel up/down key 150e has been received (S14: Yes), the channel switching control module 40 determines at step S15 whether or not the instruction is a channel up instruction.

If determining that the instruction is a channel up instruction (S15: Yes), at step S16 the channel switching control module 40 acquires a reproduction start position of a channel that is larger in number than the channel of the program being played back. More specifically, the channel switching control module 40 acquires a reproduction start position by searching for the same time information of a channel that is larger in number than the channel of the program being played back among channels programs of which were recorded by the second recording method at the same time as the program being played back and acquiring an address corresponding to the thus-found time information. Then, the process returns to step S12, where the transport stream 43 is read out starting from the acquired playback start position. Channel switching is thus performed.

On the other hand, if determining that the instruction is not a channel up instruction (S15: no), at step S17 the channel switching control module 40 acquires a reproduction start position of a channel that is smaller in number than the channel of the program being played back. More specifically, the channel switching control module 40 acquires a reproduction start position by searching for the same time information of a channel that is smaller in number than the channel of the program being played back among channels programs of which were recorded by the second recording method at the same time as the program being played back and acquiring an address corresponding to the thus-found time information. Then, the process returns to step S12, where the transport stream 43 of the determined channel is read out starting from the acquired playback start position. Channel switching is thus performed.

If determining that no instruction made through the channel up/down key 150e has been received (S14: No), the channel switching control module 40 determines at step S18 whether or not it has received an instruction made through a direct channel selection key 150c. If it is determined that no instruction made through a direct channel selection key 150c has been received (S18: No), the process is finished. On the other hand, if determining that an instruction made through a direct channel selection key 150c has been received (S18: Yes), the channel switching control module 40 determines at step S19 whether or not a program(s) of the specified channel is recorded.

If determining that no program of the specified channel is recorded (S19: No), at step S20 the channel switching control module 40 performs a warning display to the effect that switching cannot be made to the specified channel. On the other hand, determining that a program(s) of the specified channel is recorded (S19: Yes), at step S21 the channel switching control module 40 acquires a playback start position of the specified channel. More specifically, the channel switching control module 40 acquires a reproduction start position by searching for the same time information of the channel specified by the direct channel selection switch 150c among channels programs of which were recorded by the second recording method at the same time as the program being played back and acquiring an address corresponding to the thus-found time information. Then, the process returns to step S12, where data are read out starting from the acquired playback start position. Channel switching is thus performed.

Although in the embodiment time information is acquired from the time information table 42, the invention is not limited to such a case. Time information may be acquired by referring to TOTs that are contained in a transport stream 43.

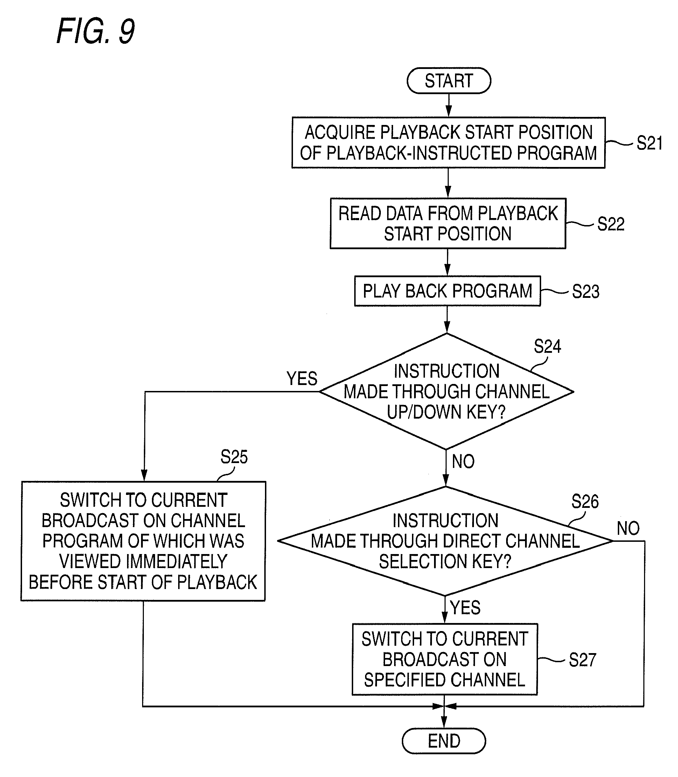

Fig. 9 is a flowchart of a process of the first playback method which is executed by the channel switching control module 40 in the embodiment. A channel switching process of the first playback method, which is executed during a playback, will be described below with reference to Fig. 9.

First, at step S21, the recording/playback control module 22 acquires a playback start position by searching the first recording area 171 for an address corresponding to a channel and a start time of a program selected from the recorded program list. At step S22, the recording/playback control module 22 reads a transport stream 41 from the first recording area 171 starting from the acquired playback start position. At step S23, the recording/playback control module 22 plays back the program by processing the read-out transport stream 41 and supplying resulting data to the audio processing module 15 and the video processing module 16.

At step S24, the channel switching control module 40 determines whether or not it has received an instruction made through the channel up/down key 150e. If determining that an instruction made through the channel up/down key 150e has been received (S24: Yes), at step S25 the channel switching control module 40 makes switching to a current broadcast on a channel a program of which was viewed immediately before the start of the playback. Alternatively, the channel switching control module 40 makes switching to a current broadcast on a channel whose number is adjacent to a channel number of a program that was viewed immediately before the start of the playback.

If determining that no instruction made through the channel up/down key 150e has been received (S24: No), the channel switching control module 40 determines at step S26 whether or not it has received an instruction made through a direct channel selection key 150c. If it is determined that no instruction made through a direct channel selection key 150c has been received (S26: No), the process is finished. On the other hand, if determining that an instruction made through a direct channel selection key 150c has been received (S26: Yes), at step S27 the channel switching control module 40 makes switching to a current broadcast of the specified channel. The channel switching operation, performed during the playback, of the first playback method is thus finished.

The above-described embodiment can enhance the ease of operation by switching the channel according to a recorded program being played back. More specifically, where programs of plural channels were recorded simultaneously, by switching to another channel a program of which was recorded at the same time as a recording time of a current playback position of a program being played back, past programs can be viewed with channel switching as if the user existed at that past time point and viewed those programs in real time. This makes it possible to realize a manner of playback of recorded programs from a different perspective than in conventional cases, and to provide a new method for searching for programs to be viewed from an increased number of recorded programs.

Where a certain program is being played back by specifying it individually, switching is made to a program being broadcast currently. As a result, channel switching is performed even if no program of any another channel was recorded at the same time as a recording time of a current playback position of the program being played back. This makes it possible to further enhance the ease of operation of the TV broadcast receiver 100.

Constituent components disclosed in the aforementioned embodiments may be combined suitably to form various modifications. For example, some of all constituent components disclosed in one of the embodiments may be removed or the constituent components disclosed in different embodiments may be appropriately combined.

## Claims

1. An electronic apparatus comprising:
a broadcast receiving module configured to receive video signals on a plurality of channels;
a channel switching control module configured to switch the played-back video signal to a video signal on one of the channels in response to a received switching instruction; and
a recording/playback control module configured to:
record the received video signals in a storage medium using either a first recording method or a second recording method, wherein the first recording method is for recording a video signal on one of the channels, and the second recording method is for recording a plurality of video signals on a plurality of channels; and
play back the video signals using either a first playback method or a second playback method, wherein the first playback method is for playing back the video signal on said one of the channels recorded by the first recording method, and the second playback method is for playing back each of the video signals on the channels recorded by the second recording method, by switching the video signals on the channels,
wherein when the channel switching control module receives a switching instruction while the recording/playback control module is playing back the video signal using the first playback method, the channel switching control module switches the played-back video signal to a video signal being broadcast currently on a channel, in response to the switching instruction,
wherein when the channel switching control module receives a switching instruction while the recording/playback control module is playing back one of the video signals using the second playback method, the channel switching control module switches said one of the video signals being played back to another one of the recorded video signals, in response to the switching instruction, and the recording/playback control module plays back said another one of the recorded video signals from approximately the same time as a playback position of said one of the video signals at the time of receiving the switching instruction.

2. The apparatus of Claim **1**,
wherein the switching instruction is either a first switching instruction that specifies a channel directly or a second switching instruction to increase or decrease the channel number,
wherein when the channel switching control module receives the first switching instruction while the recording/playback control module is playing back one of the video signals using the second playback method, the channel switching control module switches said one of the video signals being played back to another one of the recorded video signals, in response to the first switching instruction, and the recording/playback control module plays back said another one of the recorded video signals from approximately the same time as a playback position of said one of the video signals at the time of receiving the first switching instruction, and
wherein when the channel switching control module receives the second switching instruction while the recording/playback control module is playing back one of the video signals using the second playback method, the channel switching control module switches said one of the video signals being played back to another one of the recorded video signals, in response to the second switching instruction, and the recording/playback control module plays back said another one of the recorded video signals from approximately the same time as a playback position of said one of the video signals at the time of receiving the second switching instruction.

3. The apparatus of Claim **2,** wherein if the video signal on the channel specified directly by the first switching instruction is not recorded, the channel switching module displays an error that switching cannot be made to the channel.

4. The apparatus of Claim **3,**
wherein when the channel switching control module receives the first switching instruction while the recording/playback control module is playing back the video signal using the first playback method, the channel switching control module switches the played-back video signal to a video signal being broadcast currently on the channel that is directly specified by the first switching instruction, and
wherein when the channel switching control module receives the second switching instruction while the recording/playback control module is playing back the video signal using the first playback method, the channel switching control module switches the played-back video signal to a video signal being broadcast currently on a channel whose video signal was viewed just before a start of the playback by the first playback method.

5. The apparatus of Claim **3,**
wherein when the channel switching control module receives the first switching instruction while the recording/playback control module is playing back the video signal using the first playback method, the channel switching control module switches the played-back video signal to a video signal being broadcast currently on the channel that is directly specified by the first switching instruction, and
wherein when the channel switching control module receives the second switching instruction while the recording/playback control module is playing back the video signal using the first playback method, the channel switching control module switches the played-back video signal to a video signal being broadcast currently on a channel, in response to the second switching instruction, wherein the channel number of the channel is larger or smaller than that of a channel whose video signal was viewed just before a start of the playback by the first playback method.

6. The apparatus of Claim **5,**
wherein the recording/playback control module records, for each of the channels, time information of the video signals and addresses indicating recording positions of the video signals in the storage medium, wherein the time information and the addresses are correlated with each other, and
wherein when the channel switching control module receives the first or second switching instruction while the recording/playback control module is playing back one of the video signals using the second playback method, the channel switching control module switches said one of the video signals being played back to another one of the recorded video signal, in response to the first or second switching instruction, and
wherein the recording/playback control module acquires an address indicating a position in the storage medium, the address being correlated with time information corresponding to a playback position of said one of the video signals at the time of receiving the first or second switching instruction, and plays back said another one of the recorded video signals, based on the position in the storage medium indicated by the address.

7. The apparatus of any one of Claims **1** to **6,** further comprising:
a display device configured to display the played-back video signal.

8. A channel switching method comprising:
receiving video signals on a plurality of channels;
recording the received video signals in a storage medium using either a first recording method or a second recording method, wherein the first recording method is for recording a video signal on one of the channels, and the second recording method is for recording a plurality of video signals on a plurality of channels;
playing back the video signals using either a first playback method or a second playback method, wherein the first playback method is for playing back the video signal on said one of the channels recorded by the first recording method, and the second playback method is for playing back each of the video signals on the channels recorded by the second recording method, by switching the video signals on the channels,
when receiving a switching instruction while playing back the video signal using the first playback method,
switching the played-back video signal to a video signal being broadcast currently on a channel, in response to the switching instruction; and
when receiving a switching instruction while playing back one of the video signals using the second playback method,
switching said one of the video signals being played back to another one of the recorded video signals, in response to the switching instruction, and playing back said another one of the recorded video signals from approximately the same time as a playback position of said one of the video signals at the time of receiving the switching instruction.
